# EUROPEAN PATENT APPLICATION

(11) **EP 4 783 156 A1**
(43) Date of publication of application: **29.07.2026**
(21) Application number: 25201276.0
(22) Date of filing: 10.09.2025
(51) Int. Cl.: G10H 3/14

(54) **ELECTRONIC PERCUSSION INSTRUMENT AND MOUNTING METHOD OF SENSOR**

(30) Priority: 24.01.2025 JP 2025010941
(71) Applicant: Roland Corporation, Hamamatsu-shi, Shizuoka 431-1304 (JP)
(72) Inventor: YOSHINO, Kiyoshi, Hamamatsu, Shizuoka, 431-1202 (JP)
(74) Representative: Becker, Eberhard

(57) **Abstract**

Since a bell sensor (14) is mounted to the lower surface of a bell portion (12a) via a bell frame (13), vibration caused by a strike on the bell portion can be transmitted to the bell sensor via the bell frame. Therefore, even if the bell portion is struck in the directly above vicinity of the bell sensor, the output value of the bell sensor can be suppressed from becoming extremely large. Since the bell frame is connected to the lower surface of the bell portion along the circumferential direction, even if the bell portion is struck at a position away from the bell sensor in the circumferential direction, vibration caused by the strike is easily transmitted to the bell sensor via the bell frame. Therefore, the sensitivity distribution of the bell sensor for a strike on the bell portion can be made uniform regardless of differences in striking position.

## Description

### Technical Field

The disclosure relates to an electronic percussion instrument and a mounting method of a sensor, and particularly relates to an electronic percussion instrument and a mounting method of a sensor capable of accurately detecting a strike on a striking surface frame.

### Background

For example, Patent Document 1 describes a cymbal 100 (striking surface frame) including a central portion 10 (bell portion) that forms a central side part of a striking surface, and an annular portion 20 (bow portion) that is formed in an annular shape surrounding the central portion 10. Sensors are mounted to the central portion 10 and the annular portion 20 to detect vibration caused by a strike on the portions 10 and 20.

Since the central portion 10 and the annular portion 20 are connected by a first connecting portion 30 made of an elastic body, vibration caused by a strike on the central portion 10 or the annular portion 20 can be attenuated by the first connecting portion 30. This can suppress the sensor of the annular portion 20 from erroneously detecting vibration caused by a strike on the central portion 10, and suppress the sensor of the central portion 10 from erroneously detecting vibration caused by a strike on the annular portion 20.

### Related Art Document

### Patent Document

[Patent Document 1] Japanese Patent Application Laid-Open No. 2014-089369 (for example, paragraphs 0022 to 0027, 0081, and FIG. 3)

### SUMMARY

### Problem to be Solved by the Invention

However, in the related technology described above, for example, in the case of a strike being performed on the central portion 10, the sensor output value becomes large in response to a striking position being in the vicinity of the sensor, while the sensor output value becomes small in response to a striking position being distant from the sensor. Therefore, variations are likely to occur in the sensitivity distribution of the sensor for a strike on the central portion 10, and similar variations are also likely to occur in the sensitivity distribution of the sensor of the annular portion 20. Therefore, there has been a problem that a strike on the cymbal 100 (striking surface frame) cannot be detected accurately.

The disclosure has been made to solve the above-described problem, and aims to provide an electronic percussion instrument and a mounting method of a sensor capable of accurately detecting a strike on a striking surface frame.

### Means for Solving the Problem

To achieve this objective, an electronic percussion instrument according to the disclosure includes: a striking surface frame including a bell portion that forms a central side part of a striking surface, a bow portion that is formed in an annular shape surrounding the bell portion and forms an outer peripheral side part of the striking surface, and a connecting portion that is made of an elastic body and connecting an inner edge side part of the bow portion to the bell portion; a sensor frame connected along a circumferential direction to a lower surface of the bell portion or the bow portion of the striking surface frame; and a sensor mounted to the sensor frame and detecting vibration of the sensor frame.

A mounting method of a sensor according to the disclosure is a method for mounting a sensor in an electronic percussion instrument, which includes a striking surface frame including a bell portion that forms a central side part of a striking surface, a bow portion that is formed in an annular shape surrounding the bell portion and forms an outer peripheral side part of the striking surface, and a connecting portion that is made of an elastic body and connecting an inner edge side part of the bow portion to the bell portion. The mounting method includes: connecting a sensor frame along a circumferential direction to a lower surface of the bell portion or the bow portion of the striking surface frame; and mounting the sensor that detects vibration of the sensor frame to the sensor frame.

### BRIEF DESCRIPTION OF THE DRAWINGS

FIG. 1 is a cross-sectional view of the electronic percussion instrument of the first embodiment.
FIG. 2 is a partially enlarged cross-sectional view of the electronic percussion instrument with part II of FIG. 1 enlarged.
FIG. 3 is a cross-sectional view of the electronic percussion instrument taken along line III-III of FIG. 1.
FIG. 4 is a cross-sectional view of the electronic percussion instrument of the second embodiment.
FIG. 5 is an exploded perspective view of the electronic percussion instrument of the third embodiment.
FIG. 6 is a partially enlarged cross-sectional view of the electronic percussion instrument.
FIG. 7A is a perspective view of the bell frame of the electronic percussion instrument of the fourth embodiment, and FIG. 7B is a partially enlarged cross-sectional view of the electronic percussion instrument.
FIG. 8A is a perspective view of the bell frame of the electronic percussion instrument of the fifth embodiment, and FIG. 8B is a partially enlarged cross-sectional view of the electronic percussion instrument.

### DESCRIPTION OF THE EMBODIMENTS

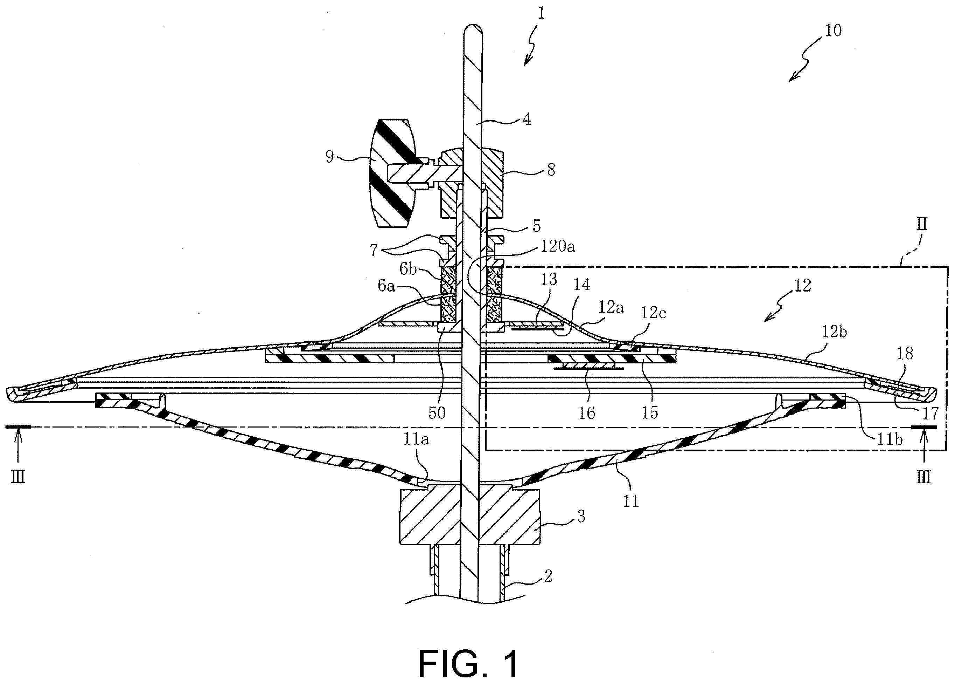

Hereinafter, preferred embodiments will be described with reference to the accompanying drawings. First, the overall configuration of an electronic percussion instrument 10 of the first embodiment will be described with reference to FIG. 1. FIG. 1 is a cross-sectional view of the electronic percussion instrument 10 of the first embodiment. FIG. 1 illustrates a cross-section including the axis of the electronic percussion instrument 10 (bottom frame 11 and striking surface frame 12). Further, to simplify the drawing, illustration of part of the configuration of the electronic percussion instrument 10 is omitted, and only the main parts are illustrated in FIG. 1.

As shown in FIG. 1, the electronic percussion instrument 10 is an electronic hi-hat that simulates an acoustic hi-hat cymbal. The electronic percussion instrument 10 includes a bottom frame 11 (bottom cymbal) and a striking surface frame 12 (top cymbal) that moves vertically on the upper side of the bottom frame 11. These frames 11 and 12 are supported by a stand 1.

The bottom frame 11 is formed in a disc shape using metal or a resin material, and a through hole 11a for supporting the bottom frame 11 on the stand 1 is formed at the center of the bottom frame 11. The bottom frame 11 is inclined upward gently from the through hole 11a toward the outer edge side, and a cushioning material 11b is bonded to the outer edge part of the upper surface of the bottom frame 11.

The cushioning material 11b is formed in an annular shape using an elastic material such as rubber or thermoplastic elastomer. Although details will be described later, the cushioning material 11b mitigates the impact at the time of contact between the bottom frame 11 and the striking surface frame 12.

The striking surface frame 12 includes a bell portion 12a that simulates the shape of a bell of a cymbal, a bow portion 12b that simulates the shape of a bow of a cymbal, and a connecting portion 12c that connects the bell portion 12a and the bow portion 12b. The upper surface of the striking surface frame 12 is a striking surface to be struck by a performer, and the central side part of the striking surface is formed by the bell portion 12a, and the outer peripheral side part of the striking surface is formed by the bow portion 12b.

The bell portion 12a and the bow portion 12b are respectively formed using metal or a resin material. The bell portion 12a and the bow portion 12b may be formed in a plate shape with multiple through holes distributed (for example, using punching metal in the case of metal), or may be formed in a plate shape without such through holes.

A through hole 120a for supporting the striking surface frame 12 on the stand 1 is formed at the center of the bell portion 12a. The bell portion 12a is formed in a bowl shape that is inclined downward from the through hole 120a toward the outer peripheral side, and the bow portion 12b is formed in an annular shape surrounding the bell portion 12a. The bow portion 12b is inclined downward more gently toward the outer peripheral side than the bell portion 12a, and the striking surface frame 12 is formed in a substantially disc shape as a whole by the bell portion 12a and the bow portion 12b.

The inner edge of the bow portion 12b is connected to the outer edge of the bell portion 12a via the connecting portion 12c. The connecting portion 12c has the same configuration as the first connecting portion and the second connecting portion (for example, first connecting portion 30 and second connecting portion 40) described in Japanese Patent Application Laid-Open No. 2014-089369, and is formed in an annular shape using an elastic material such as rubber or thermoplastic elastomer.

By interposing such a connecting portion 12c made of an elastic body between the bell portion 12a and the bow portion 12b, vibration caused by a strike on the portions 12a and 12b can be attenuated by the connecting portion 12c even in the case of the bell portion 12a and the bow portion 12b being made of metal. Therefore, the striking sound of striking on the striking surface frame 12 can be reduced.

A bell sensor 14 is mounted to the lower surface of the bell portion 12a via a bell frame 13, and a bow sensor 16 is mounted to the lower surface of the bow portion 12b via a bow frame 15. Additionally, an edge sensor 18 is mounted to the lower surface on the outer edge side of the bow portion 12b via an edge frame 17, and these sensors 14, 16, and 18 are piezoelectric elements that detect vibration caused by a strike on each portion of the striking surface frame 12.

The stand 1 that supports the bottom frame 11 and the striking surface frame 12 includes a cylindrical shaft 2. The shaft 2 is configured to be capable of standing independently on an installation surface by legs (not shown). A substantially cylindrical support body 3 for supporting the bottom frame 11 is mounted to the upper end of the shaft 2, and a rod 4 for supporting the striking surface frame 12 is inserted on the inner peripheral side of the shaft 2 and the support body 3. In FIG. 1, detailed illustration of the cross-sectional structure of the support body 3 is omitted, and hatching is applied.

By passing the rod 4 through the through hole 11a of the bottom frame 11, the bottom frame 11 is supported on the upper surface of the support body 3 in a swingable manner. The rod 4 extends to the upper side beyond the support body 3, and a cylindrical tubular member 5 is mounted to the upper end side of the rod 4.

A protruding portion 50 for supporting the striking surface frame 12 protrudes in a flange shape from the lower end portion of the tubular member 5, and a lower washer 6a and an upper washer 6b are sequentially mounted on the protruding portion 50. The upper washer 6b and the lower washer 6a are each formed in a cylindrical shape using a material such as felt.

After passing the rod 4 (tubular member 5) through the through hole 120a of the striking surface frame 12 (bell portion 12a) and overlapping the striking surface frame 12 on the lower washer 6a, the upper washer 6b is overlapped on the striking surface frame 12. A male thread is formed on the outer peripheral surface of the tubular member 5, and a nut 7 is tightened to press the upper washer 6b downward, so that the striking surface frame 12 (bell portion 12a) is sandwiched by the upper washer 6b and the lower washer 6a. Thereby, the striking surface frame 12 is supported on the rod 4 in a swingable manner.

A clutch 8 is fixed to the upper end portion of the tubular member 5, and a wing bolt 9 is tightened toward the rod 4 from the side surface of the clutch 8, so that the tubular member 5 is fixed to the rod 4. On the other hand, by loosening the wing bolt 9, it is possible to adjust the relative position of the tubular member 5 (striking surface frame 12) with respect to the rod 4.

Although not shown, a pedal to be stepped on by the performer is provided at the lower portion of the stand 1, and the rod 4 moves vertically by operation of the pedal. FIG. 1 illustrates an open state in which the pedal is released from stepping, and the bottom frame 11 and the striking surface frame 12 are separated vertically. In response to the pedal being stepped on from this open state, the striking surface frame 12 that displaces downward comes into contact with the bottom frame 11 to become a closed state.

In the case of performing with the electronic percussion instrument 10, the performer performs by striking the striking surface frame 12 with a stick or by bringing the striking surface frame 12 to the closed state. The striking on the striking surface frame 12 is detected by the above-described bell sensor 14, bow sensor 16, and edge sensor 18.

In addition, the closed state of the striking surface frame 12 accompanying the stepping of the pedal is detected by a displacement sensor (not shown) (which detects the vertical displacement amount of the striking surface frame 12). Since a known configuration can be adopted for this displacement sensor, detailed description is omitted, but the displacement sensor described in Japanese Patent Application Laid-Open No. 2009-069848 is exemplified as a known configuration.

Signals based on the detection results of the sensors 14, 16, and 18 and the displacement sensor are output to a sound source device (not shown). Thereby, musical tones are generated according to performance of striking the striking surface frame 12 or performance of closing the striking surface frame 12.

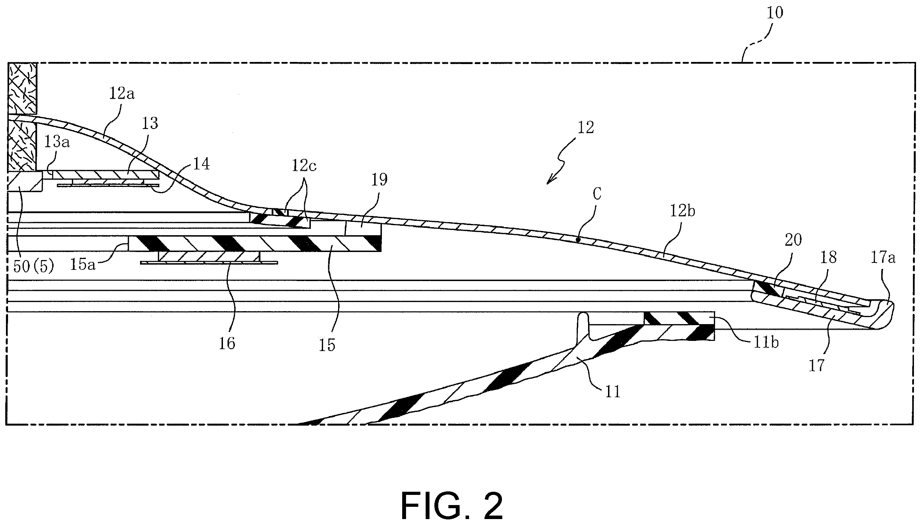

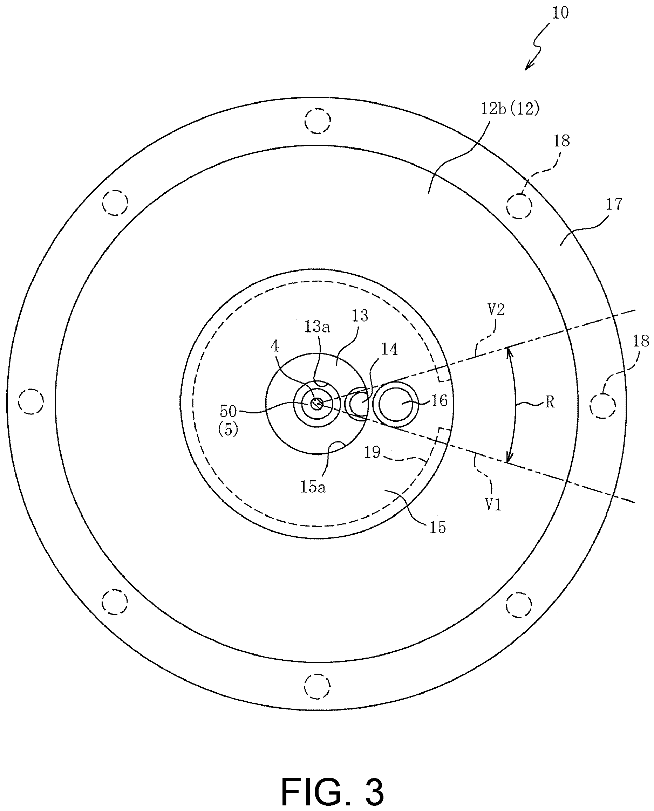

Next, the detailed configuration of the electronic percussion instrument 10 will be described with reference to FIG. 2 and FIG. 3. FIG. 2 is a partially enlarged cross-sectional view of the electronic percussion instrument 10 with part II of FIG. 1 enlarged, and FIG. 3 is a cross-sectional view of the electronic percussion instrument 10 taken along line **III-III** of FIG. 1. In FIG. 3, illustration of the bottom frame 11 is omitted.

As shown in FIG. 2 and FIG. 3, the bell frame 13 is formed in a disc shape having a through hole 13a at the center, and the outer edge of the bell frame 13 is directly connected (bonded) to the bell portion 12a by an adhesive or the like. Although not shown, the connection (bonding) range between the bell portion 12a and the bell frame 13 is continuous over the entire circumference of the bell frame 13 (bell portion 12a).

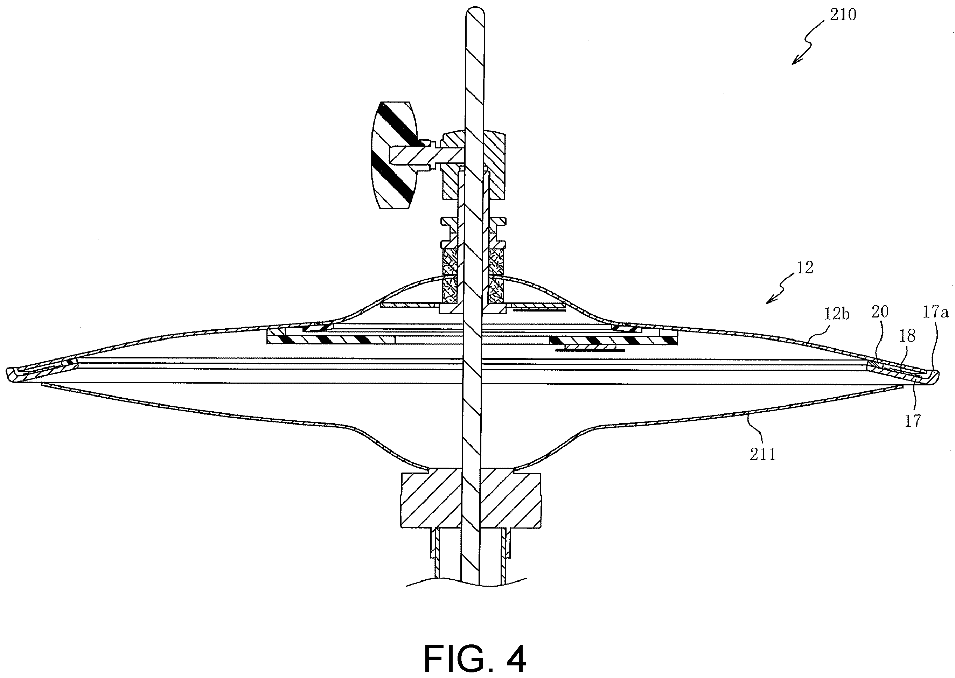

On the lower surface of the inner peripheral side (left side of FIG. 2) with respect to a radial center C of the bow portion 12b, an annular elastic body 19 is bonded by an adhesive or the like. The elastic body 19 is formed using an elastic material such as rubber or thermoplastic elastomer, and the bow frame 15 is bonded to the lower surface of the elastic body 19 by an adhesive or the like. The bow frame 15 is formed in a disc shape having a through hole 15a at the center, and the diameters of the through holes 13a and 15a of the bell frame 13 and the bow frame 15 are formed to a size so that the frames 13 and 15 do not come into contact with each portion of the stand 1 (for example, the protruding portion 50 of the cylindrical member 5 shown in FIG. 3 and FIG. 4) in the case of the striking surface frame 12 swinging with respect to the stand 1 (rod 4).

The bell sensor 14 and the bow sensor 16 are respectively mounted to the lower surfaces of the frames 13 and 15, but for example, in the case of a configuration where the bell sensor 14 is directly mounted to the lower surface of the bell portion 12a, the output value of the bell sensor 14 tends to become extremely large in response to the bell portion 12a being struck in the directly above vicinity of the bell sensor 14. On the other hand, the sensor output value of the bell sensor 14 becomes small in response to the bell portion 12a being struck at a position away from the bell sensor 14. Therefore, there is a problem that variations occur in the sensitivity distribution of the sensor for a strike on the bell portion 12a, and a similar problem occurs in the case of directly mounting the bow sensor 16 to the bow portion 12b.

In contrast, in the present embodiment, the bell sensor 14 is mounted to the lower surface of the bell portion 12a via the bell frame 13, making it possible to transmit vibration caused by a strike on the bell portion 12a to the bell sensor 14 via the bell frame 13. Therefore, for example, even in the case of the bell portion 12a being struck in the directly above vicinity of the bell sensor 14, it is possible to suppress the output value of the bell sensor 14 from becoming extremely large.

Further, since the bell frame 13 is connected to the lower surface of the bell portion 12a along the circumferential direction, even in the case of a position away from the bell sensor 14 in the circumferential direction being struck, vibration caused by the strike is easily transmitted to the bell sensor 14 via the bell frame 13. Thereby, the sensitivity distribution of the bell sensor 14 for a strike on the bell portion 12a can be made uniform regardless of differences in striking position, enabling the bell sensor 14 to accurately detect a strike on the bell portion 12a.

In addition, similarly for the bow portion 12b, the bow frame 15 is connected to the lower surface of the bow portion 12b along the circumferential direction (via the elastic body 19 extending in the circumferential direction), and the bow sensor 16 is mounted to the bow frame 15, so the sensitivity distribution of the bow sensor 16 for a strike on the bow portion 12b can be made uniform regardless of differences in striking position. Therefore, a strike on the bow portion 12b can be accurately detected by the bow sensor 16.

Furthermore, since the connecting portion 12c made of an elastic body is interposed between the bell portion 12a and the bow portion 12b, vibration transmitted between the bell portion 12a and the bow portion 12b can be attenuated by the connecting portion 12c. This can suppress the bow sensor 16 from erroneously detecting vibration caused by a strike on the bell portion 12a, and suppress the bell sensor 14 from erroneously detecting vibration caused by a strike on the bow portion 12b. Therefore, a strike on the portions 12a and 12b of the striking surface frame 12 can be accurately detected by the bell sensor 14 and the bow sensor 16.

Here, since the rigidity of the bell portion 12a is higher than the rigidity of the bow portion 12b, deformation occurring in the bell portion 12a in response to a strike on the bell portion 12a is relatively small, while deformation of the bow portion 12b in response to a strike on the bow portion 12b tends to become larger than the bell portion 12a. Therefore, for example, in a configuration where the bow frame 15 is directly mounted to the lower surface of the bow portion 12b, load due to deformation of the bow portion 12b tends to act on the connection part between the bow portion 12b and the bow frame 15. Also, in a configuration where the bow frame 15 is directly mounted to the bow portion 12b, deformation of the bow portion 12b tends to be hindered by the bow frame 15, so the striking feel of striking the bow portion 12b deteriorates.

In contrast, in the present embodiment, the bell frame 13 is directly connected to the lower surface of the bell portion 12a (without an elastic body therebetween), while the bow frame 15 is mounted to the lower surface of the bow portion 12b via the elastic body 19. With the bell frame 13 directly connected to the bell portion 12a, it is unnecessary to provide components such as the elastic body 19, so the product cost of the electronic percussion instrument 10 can be reduced. Additionally, since the bell portion 12a having relatively high rigidity is less likely to deform under a strike, damage at the connection part can be suppressed even in the case of the bell frame 13 being directly connected to the bell portion 12a.

On the other hand, since the elastic body 19 is interposed between the bow portion 12b and the bow frame 15, deformation of the bow portion 12b due to striking can be absorbed by the elastic body 19. Therefore, it is possible to suppress load due to deformation of the bow portion 12b from being applied to the connection part between the bow portion 12b and the bow frame 15, so damage to the electronic percussion instrument 10 can be suppressed. Further, by interposing the elastic body 19 between the bow portion 12b and the bow frame 15, it is possible to prevent deformation of the bow portion 12b from being hindered by the bow frame 15, allowing the bow portion 12b to deform naturally.

Besides, in the present embodiment, the bell frame 13 is formed using a metal plate, while the bow frame 15 is formed using a resin plate. Since the bow frame 15 has lower rigidity than the bell frame 13, deformation of the bow portion 12b can be more effectively prevented from being hindered by the bow frame 15. Therefore, the bow portion 12b is allowed to deform naturally, thereby improving the striking feel of striking the bow portion 12b.

As described above, the connecting portion 12c made of an elastic body is interposed between the bell portion 12a and the bow portion 12b, so it is possible to generally suppress the bow sensor 16 from erroneously detecting vibration caused by a strike on the bell portion 12a. However, in order to reliably suppress such erroneous detection, it is preferable to widen the spacing between the elastic body 19 and the connecting portion 12c in the radial direction.

On the other hand, for example, in the case of mounting the elastic body 19 near the radial center C of the bow portion 12b to widen the spacing between the elastic body 19 and the connecting portion 12c, both the outer peripheral side and the inner peripheral side of the bow portion 12b with respect to the elastic body 19 are easily struck in performance of striking the bow portion 12b. In such a configuration, the behavior of the bow frame 15 in response to vibration caused by a strike on the bow portion 12b (how vibration is transmitted to the bow sensor 16) is likely to change depending on whether the strike is on the outer peripheral side or the inner peripheral side of the elastic body 19. This may make it difficult to sufficiently improve the sensitivity distribution of the bow sensor 16 for a strike on the bow portion 12b.

In contrast, in the present embodiment, the elastic body 19 is mounted on the inner peripheral side with respect to the radial center C of the bow portion 12b. Therefore, the outer peripheral side with respect to the elastic body 19 becomes easily struck constantly in the case of performance of striking the bow portion 12b. This makes it easy for the behavior of the bow frame 15 in response to vibration caused by a strike on the bow portion 12b to become constant, so the sensitivity distribution of the bow sensor 16 for a strike on the bow portion 12b can be made uniform.

In addition, even in the case of bringing the elastic body 19 (the connection position between the bow portion 12b and the bow frame 15) close to the connecting portion 12c, vibration caused by a strike on the bell portion 12a is attenuated at two locations, that is, the connecting portion 12c and the elastic body 19, so the bow sensor 16 can be suppressed from erroneously detecting the vibration. Therefore, vibration caused by a strike on the bell portion 12a and the bow portion 12b can be accurately detected by the bell sensor 14 and the bow sensor 16.

Also, the elastic body 19 is bonded to the upper surface of the outer edge side of the bow frame 15 (the outer peripheral side with respect to the radial center of the bow frame 15), and the bow frame 15 is provided to extend from the elastic body 19 to the inner peripheral side. Since the bow sensor 16 is mounted on the inner edge side of the bow frame 15 (the inner peripheral side with respect to the radial center of the bow frame 15), the bow sensor 16 can be disposed close to the central side of the striking surface frame 12.

Particularly, in the present embodiment, the inner edge of the bow frame 15 is located on the inner peripheral side with respect to the connecting portion 12c, and the bow sensor 16 is mounted on the inner edge side of the bow frame 15, so the bow sensor 16 can be disposed on the inner peripheral side with respect to the outer edge of the connecting portion 12c. By disposing the bow sensor 16 close to the central side of the striking surface frame 12 in this way, the vibration transmission distance from the striking position on the bow portion 12b to the bow sensor 16 can be made uniform regardless of differences in striking position in the circumferential direction of the bow portion 12b. Therefore, the sensitivity distribution of the bow sensor 16 for a strike on the bow portion 12b can be made uniform.

Here, in the vertical view of the electronic percussion instrument 10, as shown in FIG. 3, two virtual lines drawn from the axis of the electronic percussion instrument 10 toward the bow sensor 16 side to be in contact with the outer edge of the bow sensor 16 are defined as virtual lines V1 and V2. A region R sandwiched between the two virtual lines V1 and V2 is a region that overlaps with the bow sensor 16 in the radial direction, and hereinafter, this region will be described as the region R in the vicinity of the bow sensor 16.

The elastic body 19 (the connection part between the bow portion 12b and the bow frame 15) has a part divided in the circumferential direction, and this divided part of the elastic body 19 is formed in the region R in the vicinity of the bow sensor 16 (position arranged side by side with the bow sensor 16 in the radial direction). This can lengthen the vibration transmission path from the striking position to the bow sensor 16 in the case of the bow portion 12b being struck in the region R in the vicinity of the bow sensor 16. In other words, the length of the vibration transmission path can be made uniform between the case of the bow portion 12b being struck in the region R in the vicinity of the bow sensor 16 and the case of the bow portion 12b being struck on the circumferential outer side of the region R. Therefore, the sensitivity distribution of the bow sensor 16 for a strike on the bow portion 12b can be made uniform.

Although in the present embodiment, a part of the elastic body 19 (end portion of the divided part) is disposed within the region R in the vicinity of the bow sensor 16, the disclosure is not necessarily limited thereto. For example, the elastic body 19 may not be disposed in the region R in the vicinity of the bow sensor 16.

In addition, in the present embodiment, one bow sensor 16 is mounted to the bow frame 15, but for example, other bow sensors may be provided in addition to the bow sensor 16. In this case, the divided part of the elastic body 19 may be formed in a region in the vicinity of the other bow sensors, or the elastic body 19 may have no divided part (the elastic body 19 is formed in an annular shape continuous in the circumferential direction).

Next, the detailed configuration of the edge part of the electronic percussion instrument 10 will be described. On the lower surface of the outer edge side of the bow portion 12b, an annular elastic body 20 is bonded by an adhesive or the like. The elastic body 20 is formed using an elastic material such as rubber or thermoplastic elastomer, and the edge frame 17 is bonded to the lower surface of the elastic body 20 by an adhesive or the like.

The edge frame 17 is formed in an annular shape using a resin plate (see FIG. 3), and the outer edge of the bottom frame 11 (see FIG. 2) is located on the inner peripheral side with respect to the edge frame 17. This can suppress the outer edge part of the bottom frame 11 from coming into contact with the edge frame 17 in the case of the striking surface frame 12 being in the closed state, making it possible to suppress the edge sensor 18 from erroneously detecting vibration caused by the contact.

In addition, since the cushioning material 11b is mounted to the outer edge part of the upper surface of the bottom frame 11, the impact caused by contact between the bottom frame 11 and the striking surface frame can be mitigated by the cushioning material 11b. Thereby, it is possible to more effectively suppress the edge sensor 18 from erroneously detecting vibration in the case of the striking surface frame 12 being in the closed state.

A struck portion 17a (see FIG. 2) rises upward from the outer edge of the edge frame 17, and the struck portion 17a forms the edge part of the striking surface together with the upper surface of the bow portion 12b. Since the struck portion 17a protrudes upward with respect to the outer edge of the bow portion 12b, in the case of the performer striking the edge part of the bow portion 12b, the struck portion 17a is struck before the bow portion 12b. Vibration caused by a strike on the struck portion 17a is detected by the edge sensor 18 mounted to the edge frame 17.

Since the edge frame 17 is connected to the lower surface of the bow portion 12b, in the case of the edge part (struck portion 17a) of the bow portion 12b being struck, the striking surface frame 12 and the edge frame 17 can be swung integrally with respect to the stand 1 (see FIG. 1). Thereby, the relative height between the outer edge of the bow portion 12b and the struck portion 17a becomes less likely to change during performance, so vibration caused by a strike on the edge part of the bow portion 12b can be accurately detected by the edge sensor 18.

In addition, since the edge frame 17 is connected to the lower surface of the bow portion 12b via the elastic body 20, the edge frame 17 can be swung with the elastic body 20 as a fulcrum in response to a strike on the struck portion 17a. Thereby, vibration caused by a strike on the struck portion 17a is easily detected by the edge sensor 18.

Further, by interposing the elastic body 20 between the bow portion 12b and the edge frame 17, deformation of the edge frame 17 in response to a strike on the struck portion 17a can be absorbed by the elastic body 20. Thereby, the load applied to the connection part between the bow portion 12b and the edge frame 17 can be reduced compared to, for example, the case where the edge frame 17 is directly connected to the lower surface of the bow portion 12b. Therefore, the electronic percussion instrument 10 is less likely to damage.

As described above, the bow sensor 16 (striking surface sensor) is mounted to the lower surface of the bow portion 12b on the inner peripheral side with respect to the elastic body 20 (the connection part between the bow portion 12b and the edge frame 17). Vibration caused by a strike on the bow portion 12b is detected by the bow sensor 16, while vibration transmitted to the edge frame 17 (edge sensor 18) side due to the strike is attenuated by the elastic body 20. Thereby, vibration caused by a strike on the bow portion 12b can be accurately detected by the bow sensor 16, while the edge sensor 18 can be suppressed from erroneously detecting the vibration.

In addition, since the bow frame 15 to which the bow sensor 16 is mounted is connected to the lower surface of the bow portion 12b via the elastic body 19, as described above, vibration caused by a strike on the edge part (struck portion 17a) of the bow portion 12b can be attenuated by the elastic body 19. Therefore, vibration caused by a strike on the edge part of the bow portion 12b can be accurately detected by the edge sensor 18, while the bow sensor 16 can be suppressed from erroneously detecting the vibration.

Here, in the present embodiment, the elastic body 20 is bonded to the upper surface of the inner edge side of the edge frame 17, and the edge sensor 18 is mounted to the edge frame 17 on the outer peripheral side of the elastic body 20. In contrast, for example, it is also possible to adopt a configuration where the edge frame 17 protrudes to the inner peripheral side with respect to the elastic body 20, and the edge sensor 18 is mounted to the protruding part. Even in such a configuration, the edge frame 17 can be swung with the elastic body 20 as a fulcrum in response to a strike on the struck portion 17a, so the vibration accompanying the swing can be detected by the edge sensor 18.

However, in the configuration where the edge sensor 18 is mounted to the protruding part (part located on the inner peripheral side with respect to the elastic body 20) of the edge frame 17 as described above, vibration transmitted from the edge frame 17 to the edge sensor 18 side due to a strike on the struck portion 17a may be attenuated by the elastic body 20. Therefore, vibration caused by a strike on the struck portion 17a cannot be efficiently transmitted to the edge sensor 18.

Thus, the edge sensor 18 is preferably mounted between the elastic body 20 and the struck portion 17a (on the outer peripheral side with respect to the elastic body 20) as in the present embodiment. Thereby, vibration of the edge frame 17 caused by striking of the struck portion 17a can be efficiently transmitted to the edge sensor 18, enabling the edge sensor 18 to accurately detect such a strike.

Furthermore, the edge sensor 18 may be mounted to the lower surface of the edge frame 17, but in the present embodiment, the edge sensor 18 is mounted to the upper surface of the edge frame 17. Since a space corresponding to the thickness of the elastic body 20 is formed between the upper surface of the edge frame 17 and the lower surface of the bow portion 12b, disposing the edge sensor 18 within this space can suppress damage to the edge sensor 18 and improve the appearance of the electronic percussion instrument 10.

Additionally, as shown in FIG. 3, multiple edge sensors 18 are mounted and arranged in the circumferential direction of the edge frame 17 (see FIG. 3), and in the present embodiment, eight edge sensors 18 are arranged at equal intervals in the circumferential direction. By mounting multiple edge sensors 18 arranged in the circumferential direction to the edge frame 17 in this way, the sensitivity distribution of the edge sensors 18 for a strike can be made uniform regardless of differences in striking position in the circumferential direction of the struck portion 17a. Therefore, a strike on the edge part of the bow portion 12b can be accurately detected by the edge sensors 18.

Next, an electronic percussion instrument 210 of the second embodiment will be described with reference to FIG. 4. The first embodiment illustrates a case of detecting the closed state of the striking surface frame 12 with the displacement sensor of the stand 1, but the second embodiment illustrates a case of detecting the closed state of the striking surface frame 12 with multiple edge sensors 18 (see FIG. 3) arranged in the circumferential direction. The same reference numerals are assigned to the same parts as in the first embodiment described above, and description thereof will be omitted. FIG. 4 is a cross-sectional view of the electronic percussion instrument 210 of the second embodiment.

As shown in FIG. 4, the electronic percussion instrument 210 of the second embodiment includes a bottom frame 211 formed using metal or a resin material. The bottom frame 211 has substantially the same configuration as the bottom frame 11 of the first embodiment, except that the outer diameter is formed larger than the bottom frame 11 of the first embodiment and the cushioning material 11b is omitted.

The outer diameter of the bottom frame 211 is formed larger than the inner diameter of the edge frame 17, and although not shown, the outer edge part of the bottom frame 211 is in contact with the lower surface of the edge frame 17 in the case of the striking surface frame 12 being in the closed state. Whether or not the striking surface frame 12 is in the closed state is determined by detecting the vibration at the time of contact with the edge sensors 18.

Since multiple edge sensors 18 are arranged in the circumferential direction on the edge frame 17 (see FIG. 3), in the case of the bottom frame 211 being in contact with the edge frame 17, the output values from the multiple edge sensors 18 are equivalent values. On the other hand, in the case of the edge part of the bow portion 12b (the struck portion 17a of the edge frame 17) being struck, among the multiple edge sensors 18, the output value of the edge sensor 18 close to the striking position becomes larger than the output values of the other edge sensors 18.

Therefore, in the case of the difference between the output values of the multiple edge sensors 18 being relatively small, it can be determined that the striking surface frame 12 is in the closed state. On the other hand, in the case of the output values of some edge sensors 18 being larger than other edge sensors 18, it can be determined that the edge part of the bow portion 12b has been struck. By detecting the closed state of the striking surface frame 12 based on the output values of the multiple edge sensors 18 in this way, the displacement sensor for detecting the closed state of the striking surface frame 12 as in the first embodiment can be omitted. Therefore, the number of components of the electronic percussion instrument 210 can be reduced to reduce the product cost of the electronic percussion instrument 210.

Further, in the present embodiment, the elastic body 20 is interposed between the lower surface of the bow portion 12b and the edge frame 17, and the edge sensors 18 are disposed between the elastic body 20 and the struck portion 17a. Since the outer diameter of the bottom frame 211 is formed larger than the outer diameter of the elastic body 20 (the outer edge of the bottom frame 211 is located on the outer peripheral side with respect to the elastic body 20), in the case of the striking surface frame 12 being in the closed state, the outer edge part of the bottom frame 211 can be brought into contact with the edge frame 17 on the outer peripheral side with respect to the elastic body 20.

As a result, the edge frame 17 becomes easy to swing with the elastic body 20 as a fulcrum at the time of being in contact with the bottom frame 211, enabling the multiple edge sensors 18 to accurately detect vibration caused by contact. Particularly, in the present embodiment, the edge sensors 18 are disposed at positions overlapping with the outer edge of the bottom frame 211 in vertical view. Therefore, vibration caused by contact between the bottom frame 211 and the edge frame 17 can be more accurately detected by the edge sensors 18.

Here, in the case of the structure that connects (bonds) the outer edge of the bell frame 13 to the lower surface of the bell portion 12a as in each of the embodiments described above, the bell portion 12a and the bell frame 13 are connected near the radial center of the bell portion 12a where the striking frequency is high. For this reason, the load from striking the bell portion 12a tends to act on the connection part between the bell portion 12a and the bell frame 13, resulting in a problem that the connection part is prone to damage.

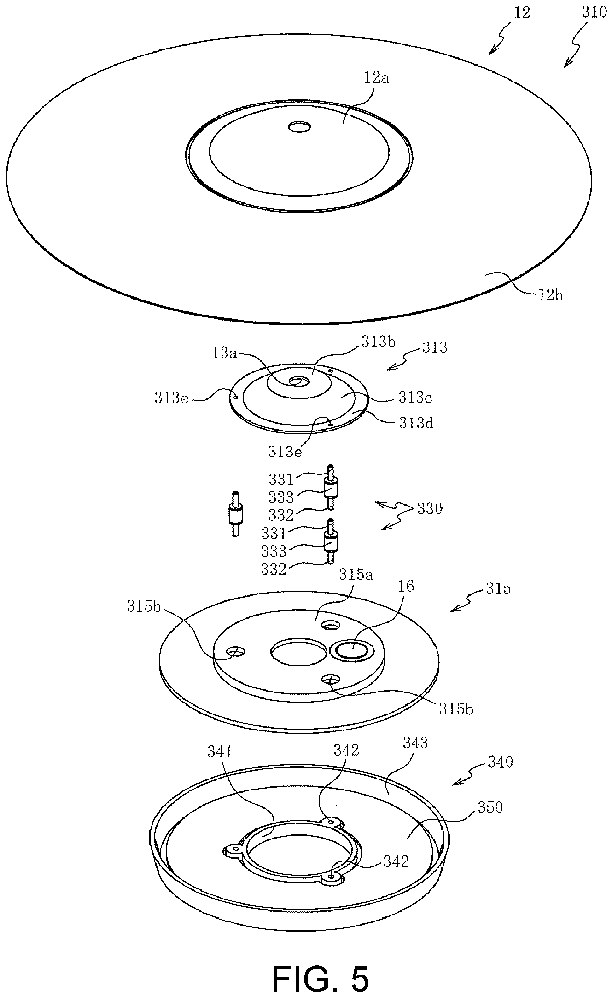

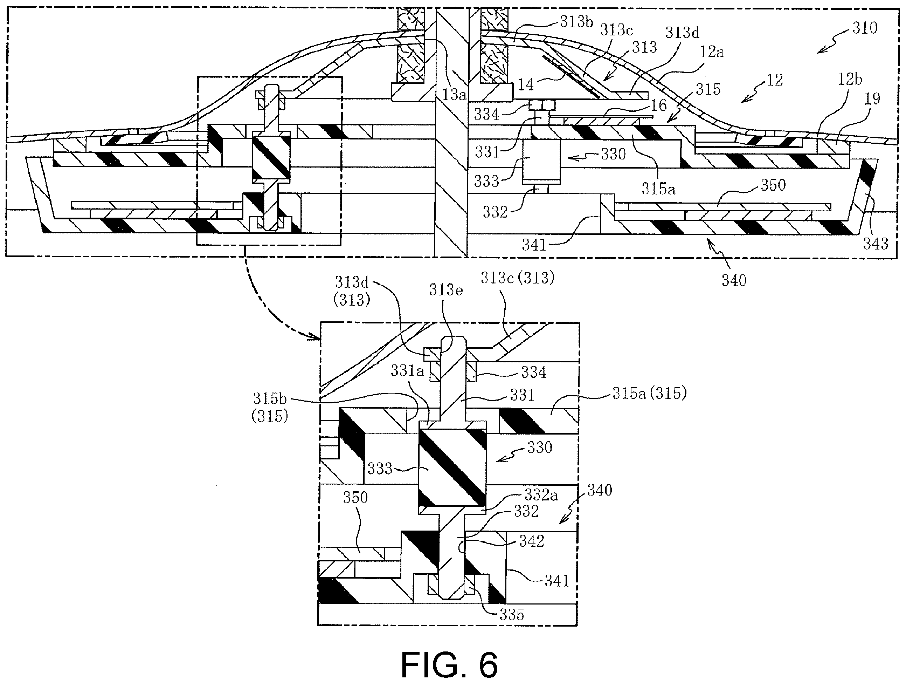

An electronic percussion instrument 310 of the third embodiment that solves this problem will be described with reference to FIG. 5 and FIG. 6. The same reference numerals are assigned to the same parts as in each of the embodiments described above, and description thereof will be omitted. FIG. 5 is an exploded perspective view of the electronic percussion instrument 310 of the third embodiment, and FIG. 6 is a partially enlarged cross-sectional view of the electronic percussion instrument 310.

As shown in FIG. 5 and FIG. 6, a bell frame 313 of the electronic percussion instrument 310 of the third embodiment includes a connection portion 313b having a through hole 13a at the center, a hanging portion 313c inclined downward (hanging downward) from the outer edge of the connection portion 313b toward the outer peripheral side, and a protruding portion 313d protruding from the outer edge of the hanging portion 313c toward the outer peripheral side. The portions 313b to 313d are integrally formed by bending a metal plate.

The connection portion 313b is connected (joined) to the lower surface of the bell portion 12a of the striking surface frame 12 by adhesion or welding, and the bell sensor 14 (see FIG. 6) is mounted to the lower surface of the hanging portion 313c. Also in the present embodiment, the bell sensor 14 is mounted to the lower surface of the bell portion 12a via the bell frame 313, and the connection portion 313b (bell frame 313) is connected to the lower surface of the bell portion 12a along the circumferential direction, so that similar to the first embodiment, the sensitivity distribution of the bell sensor 14 for a strike on the bell portion 12a can be made uniform regardless of differences in striking position.

The portions 313b to 313d constituting the bell frame 313 are respectively formed in an annular shape that is continuous in the circumferential direction. Therefore, even in the case of a position away from the bell sensor 14 in the circumferential direction being struck, the vibration caused by the strike is easy to transmit to the bell sensor 14 via the bell frame 313. Thus, the sensitivity distribution of the bell sensor 14 for a strike on the bell portion 12a can be made uniform regardless of differences in striking position.

The connection portion 313b is connected to the bell portion 12a in a region on the inner edge side with respect to the radial center of the bell portion 12a, and the region is a region struck less frequently. As a result, the load from striking the bell portion 12a can be suppressed from acting on the connection part between the bell portion 12a and the bell frame 313, thereby suppressing damage to the connection part.

The protruding portion 313d is formed with multiple (three in the present embodiment) mounting holes 313e arranged in the circumferential direction, and a connecting member 330 is mounted to each of the multiple mounting holes 313e. The connecting member 330 includes an upper shaft 331 and a lower shaft 332 provided as an upper and lower pair, and an elastic body 333 made of rubber and sandwiched between the shafts 331 and 332.

The upper shaft 331 and the lower shaft 332 respectively include flange portions 331a and 332a that protrude in a flange shape from one axial end of the respective shafts 331 and 332 (see enlarged part in FIG. 6). A columnar elastic body 333 is bonded between the flange portions 331a and 332a of the respective shafts 331 and 332.

A male thread is formed on the outer peripheral surface of the upper shaft 331, and the upper shaft 331 is fastened to a female thread formed on the inner peripheral surface of the mounting hole 313e. In addition, a nut 334 (see enlarged part in FIG. 6) is mounted on the outer periphery of the upper shaft 331, and the nut 334 is fastened to the lower surface of the protruding portion 313d.

A substrate frame 340 made of resin is fixed to the lower end portion of the lower shaft 332. The substrate frame 340 is formed in a disc shape having a through hole 341 at the center, and multiple (three in the present embodiment) mounting holes 342 arranged in the circumferential direction are formed around the through hole 341. The lower shaft 332 is inserted into each of the multiple mounting holes 342, and a nut 335 (see enlarged part in FIG. 6) is fastened to the lower end portion of the lower shaft 332 in the inserted state. Thereby, the substrate frame 340 is supported by the bell frame 313 via the connecting members 330.

An annular substrate 350 is mounted to the upper surface of the substrate frame 340, and the bell sensor 14 and the bow sensor 16 are electrically connected to the substrate 350. Musical tone signals based on the detection results of the sensors 14 and 16 are generated by the substrate 350 (control device). In addition, a power supply (not shown) is connected to the substrate 350, and the power supply is also supported on the upper surface of the substrate frame 340.

Here, for example, in a configuration where components such as the substrate 350 and power source are supported by the bow frame 315, load from the weights of these components tends to act on the connection part between the bow portion 12b and the bow frame 315 (elastic body 19 shown in FIG. 6). In addition, the bow portion 12b is struck more frequently than the bell portion 12a, and tends to deflect when struck. Therefore, in a structure where components such as the substrate 350 are supported by the bow frame 315 as described above, the load acting on the connection part between the bow portion 12b and the bow frame 315 tends to become large.

In contrast, in the present embodiment, the substrate frame 340 that supports the substrate 350 is disposed below the bow frame 315, and the bell frame 313 and the substrate frame 340 are vertically connected by the connecting members 330. Therefore, it is unnecessary to support components such as the substrate 350 with the bow frame 315. Since the connecting members 330 and the substrate frame 340 and the bow frame 315 are not in contact with each other, in the case of striking on the bow portion 12b, load from the weights of components such as the substrate 350 can be suppressed from acting on the connection part between the bow portion 12b and the bow frame 315. Therefore, damage to such a connection part can be suppressed.

Additionally, since the substrate frame 340 is elastically supported by the bell frame 313 via the elastic body 333 of the connecting member 330, vibration transmitted from the bell frame 313 to the substrate frame 340 in response to a strike on the bell portion 12a can be attenuated by the elastic body 333. Therefore, transmission of the vibration to the substrate 350 on the substrate frame 340 can be suppressed, thereby suppressing damage to the substrate 350.

A covering portion 343 for covering the bow frame 315 rises upward from the outer edge of the substrate frame 340, and the covering portion 343 is formed in a wall shape that is continuous in the circumferential direction of the substrate frame 340. Since the outer edge part of the bow frame 315 is covered from the outer peripheral side by the covering portion 343 (see FIG. 6), the appearance of the electronic percussion instrument 310 can be improved.

In addition, a gap is formed between the upper end of the covering portion 343 and the lower surface of the bow portion 12b. Therefore, even in the case of the substrate frame 340 swinging with the elastic body 333 as a fulcrum (the striking surface frame 12 and the substrate frame 340 swinging relatively) in response to a strike on the striking surface frame 12, contact between the bow portion 12b and the covering portion 343 can be suppressed. Accordingly, it is possible to prevent vibration of the bow portion 12b from being hindered by the covering portion 343, enabling the bow sensor 16 to accurately detect vibration caused by a strike on the bow portion 12b.

Here, in the present embodiment, the bell sensor 14 is mounted to the hanging portion 313c of the bell frame 313, but for example, it is also possible to adopt a configuration where the bell sensor 14 is mounted to the protruding portion 313d of the bell frame 313 while the connecting member 330 is connected to the hanging portion 313c (the substrate frame 340 is supported by the hanging portion 313c).

In such a configuration, however, the vibration transmission path from the bell portion 12a to the bell sensor 14 becomes long, while the vibration transmission path from the bell portion 12a to the substrate frame 340 (substrate 350) becomes short. Therefore, the sensitivity of the bell sensor 14 for a strike on the bell portion 12a tends to decrease, and vibration caused by a strike on the bell portion 12a is easily transmitted to the substrate 350 on the substrate frame 340.

In contrast, in the present embodiment, the bell sensor 14 is mounted to the hanging portion 313c, so the vibration transmission path from the bell portion 12a to the bell sensor 14 can be shortened compared to the case of mounting the bell sensor 14 to the protruding portion 313d as described above. Therefore, the sensitivity of the bell sensor 14 for a strike on the bell portion 12a can be improved.

Further, since the protruding portion 313d is formed to protrude toward the outer peripheral side from the lower end of the hanging portion 313c, and the connecting member 330 is connected to the protruding portion 313d, the substrate frame 340 can be supported on the outer edge side of the bell frame 313. Accordingly, it is possible to lengthen the vibration transmission path from the bell portion 12a to the substrate frame 340, thereby suppressing transmission of vibration caused by a strike on the bell portion 12a to the substrate 350. Therefore, damage to the substrate 350 can be suppressed.

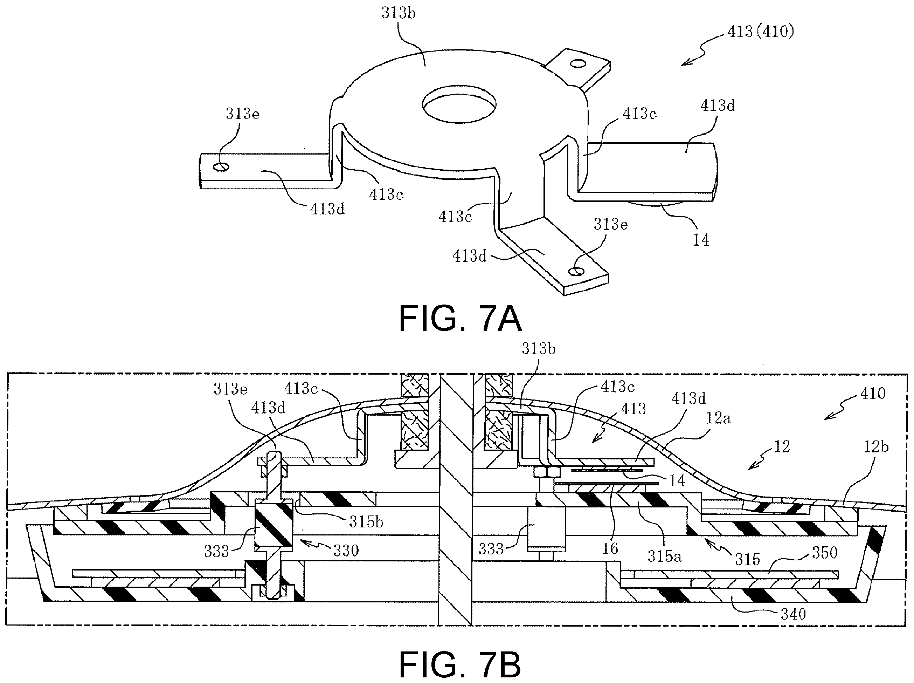

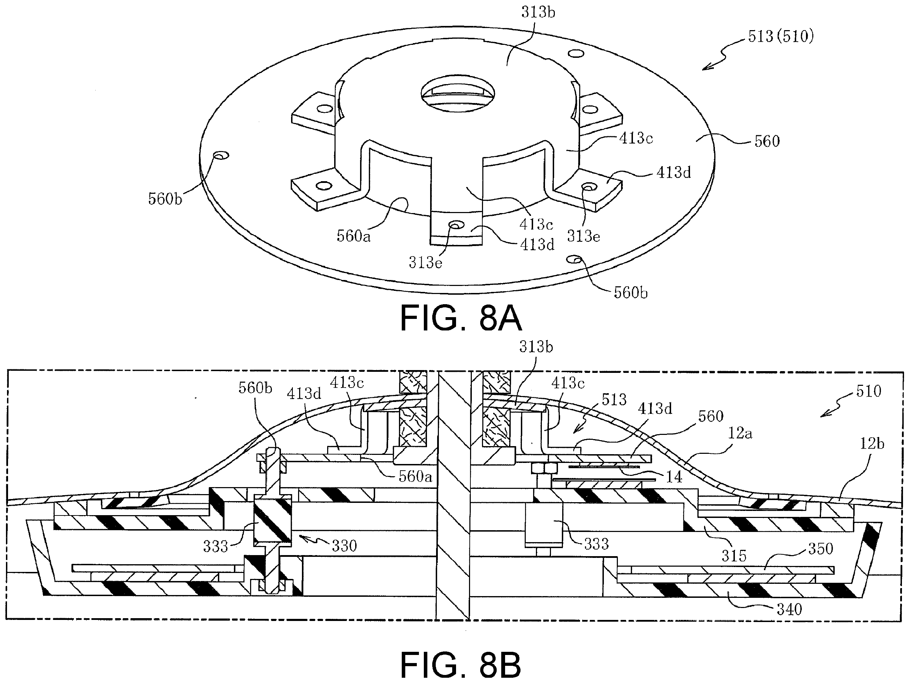

In addition, since the hanging portion 313c to which the bell sensor 14 is mounted is formed in an annular shape that is continuous in the circumferential direction, vibration caused by a strike on the bell portion 12a is easily transmitted to the bell sensor 14 compared to the case where the hanging portion 413c is divided in the circumferential direction as in the fourth and fifth embodiments described later (see FIG. 7A and FIG. 8A). Therefore, the sensitivity of the bell sensor 14 for a strike on the bell portion 12a can be improved.

Here, as described in the first embodiment, in order to make uniform the sensitivity distribution of the bow sensor 16 for a strike on the bow portion 12b, it is preferable to dispose the bow sensor 16 close to the central side of the striking surface frame 12. Therefore, the present embodiment adopts a configuration where the bow sensor 16 is mounted to a mounting portion 315a that is located on the inner peripheral side with respect to the outer edge of the bell frame 313 (protruding portion 313d) in the bow frame 315. The mounting portion 315a is a portion that faces the portions 313b to 313d of the bell frame 313 vertically (overlaps with the portions 313b to 313d in vertical view).

Multiple (three in the present embodiment) through holes 315b arranged in the circumferential direction are formed in the mounting portion 315a, and the connecting members 330 are inserted into the multiple through holes 315b (see enlarged part in FIG. 6). Accordingly, it is possible to connect the connecting members 330 to the protruding portion 313d on the outer edge side of the bell frame 313 (support the substrate frame 340 on the outer edge side of the bell frame 313) while disposing the mounting portion 315a to which the bow sensor 16 is mounted on the inner peripheral side with respect to the outer edge of the protruding portion 313d.

By disposing the mounting portion 315a on the inner peripheral side with respect to the outer edge of the protruding portion 313d, the bow sensor 16 can be disposed as close as possible to the central side of the striking surface frame 12, thereby making uniform the sensitivity distribution of the bow sensor 16 for a strike on the bow portion 12b. Further, with the substrate frame 340 supported on the outer edge side of the bell frame 313, the vibration transmission path from the bell portion 12a to the substrate 350 can be lengthened, thereby suppressing damage to the substrate 350 due to vibration caused by a strike on the bell portion 12a.

Next, an electronic percussion instrument 410 of the fourth embodiment will be described with reference to FIG. 7A and FIG. 7B. FIG. 7A is a perspective view of a bell frame 413 of the electronic percussion instrument 410 of the fourth embodiment, and FIG. 7B is a partially enlarged cross-sectional view of the electronic percussion instrument 410. The same reference numerals are assigned to the same parts as in each of the embodiments described above, and description thereof will be omitted.

As shown in FIG. 7A and FIG. 7B, the bell frame 413 of the electronic percussion instrument 410 of the fourth embodiment includes a hanging portion 413c that hangs downward (along the vertical direction) from the outer edge of the connection portion 313b, and a protruding portion 413d that protrudes to the outer peripheral side from the outer edge of the hanging portion 413c. The portions 313b, 413c, and 413d are integrally formed by bending a metal plate.

The hanging portions 413c and the protruding portions 413d are respectively formed at multiple locations (four locations in the present embodiment) at intervals in the circumferential direction, and the bell sensor 14 is mounted to the lower surface of the protruding portion 413d. Since the connection position between the bell portion 12a and the connection portion 313b is also located on the inner edge side with respect to the radial center of the bell portion 12a in the present embodiment, the load from striking the bell portion 12a can be suppressed from acting on the connection part between the bell portion 12a and the bell frame 413.

A mounting hole 313e is formed in each of the three protruding portions 413d to which the bell sensor 14 is not mounted, among the multiple protruding portions 413d arranged in the circumferential direction. The substrate frame 340 is supported in the mounting hole 313e by a support structure similar to the third embodiment described above (support structure of the connecting member 330).

Also in the present embodiment, the substrate frame 340 that supports the substrate 350 and the bell frame 413 are vertically connected by the connecting member 330, and the connecting member 330 and the substrate frame 340 are not in contact with the bow frame 315. This can suppress load from the weights of components such as the substrate 350 from acting on the connection part between the bow portion 12b and the bow frame 315 at the time of a strike on the bow portion 12b.

Further, the protruding portion 413d is formed to protrude to the outer peripheral side from the lower end of the hanging portion 413c, and the substrate frame 340 is supported on the protruding portion 413d via the connecting member 330, so that the substrate frame 340 can be supported on the outer edge side of the bell frame 313. This can lengthen the vibration transmission path from the bell portion 12a to the substrate frame 340, thereby suppressing damage to the substrate 350 due to vibration caused by a strike on the bell portion 12a.

Also, since the connecting member 330 is inserted into the through hole 315b formed in the mounting portion 315a of the bow frame 15, the substrate frame 340 can be supported on the outer edge side of the bell frame 413 while disposing the mounting portion 315a to which the bow sensor 16 is mounted on the inner peripheral side with respect to the outer edge of the protruding portion 413d.

Here, in the case of a structure where the substrate frame 340 is suspended from the connecting member 330 having the elastic body 333 as in the present embodiment, for example, in response to the entire striking surface frame 12 swinging at the time of a strike on the bow portion 12b, the substrate frame 340 may vibrate with the elastic body 333 as a fulcrum along with the swinging. Therefore, there is a risk that the bell sensor 14 may erroneously detect vibration of the substrate frame 340 caused by a strike on the bow portion 12b.

In contrast, in the present embodiment, the protruding portion 413d to which the connecting member 330 is connected and the protruding portion 413d to which the bell sensor 14 is mounted are provided separately. That is, the protruding portion 413d that supports the substrate frame 340 via the connecting member 330 and the protruding portion 413d that supports the bell sensor 14 are separated in the circumferential direction, so even if the substrate frame 340 vibrates with the elastic body 333 as a fulcrum as described above, it is difficult for the vibration to transmit to the bell sensor 14. Therefore, the bell sensor 14 can be suppressed from erroneously detecting vibration of the substrate frame 340.

Next, an electronic percussion instrument 510 of the fifth embodiment will be described with reference to FIG. 8A and FIG. 8B. FIG. 8A is a perspective view of a bell frame 513 of the electronic percussion instrument 510 of the fifth embodiment, and FIG. 8B is a partially enlarged cross-sectional view of the electronic percussion instrument 510. The same reference numerals are assigned to the same parts as in each of the embodiments described above, and description thereof will be omitted.

As shown in FIG. 8A and FIG. 8B, the bell frame 513 of the electronic percussion instrument 510 of the fifth embodiment has the same configuration as the bell frame 413 of the fourth embodiment, except that the number of hanging portions 413c and protruding portions 413d (six in the present embodiment) is increased compared to the bell frame 413 of the fourth embodiment (see FIG. 7A and FIG. 7B), and that the bell frame 513 includes a support plate 560 fixed to the lower surfaces of the protruding portions 413d. The support plate 560 is formed in a disc shape having a through hole 560a at the center, and the bell sensor 14 is mounted to the lower surface of the support plate 560.

A mounting hole 313e is formed in each of the multiple protruding portions 413d arranged in the circumferential direction, and the support plate 560 is fastened to the mounting hole 313e by fastening means (such as bolt and nut) (not shown). Thereby, the support plate 560 is fixed to the lower surface of each of the multiple protruding portions 413d. However, the support plate 560 may also be welded to the protruding portion 413d.

Since multiple protruding portions 413d arranged in the circumferential direction are connected to the support plate 560, even in the case of the bell portion 12a being struck at a position away from the bell sensor 14 in the circumferential direction, vibration caused by the strike is easily transmitted to the support plate 560 (bell sensor 14) via the portions 313b, 413c, and 413d of the bell frame 513. Therefore, the sensitivity distribution of the bell sensor 14 for a strike on the bell portion 12a can be made uniform regardless of differences in striking position.

The support plate 560 is formed with multiple (three in the present embodiment) mounting holes 560b arranged in the circumferential direction, and the substrate frame 340 is supported in the mounting holes 560b by the same support structure as in the third and fourth embodiments described above (support structure using the connecting members 330). Thereby, it is unnecessary to support the substrate 350 and components such as a power supply connected to the substrate 350 with the bow frame 315. Therefore, the load acting on the connection part between the bow portion 12b and the bow frame 315 can be reduced.

In addition, the protruding portion 413d is formed to protrude to the outer peripheral side from the lower end of the hanging portion 413c, and the substrate frame 340 is supported by the protruding portion 413d via the support plate 560 and the connecting member 330, so the substrate frame 340 can be supported on the outer edge side of the bell frame 513 as much as possible. Thereby, the vibration transmission path from the bell portion 12a to the substrate frame 340 can be lengthened, to suppress damage to the substrate 350 due to vibration caused by a strike on the bell portion 12a.

Although the disclosure has been described based on the embodiments above, the disclosure is not limited to the above embodiments in any aspect, and it can be easily inferred that various improvements and modifications are possible within the scope that does not depart from the spirit of the disclosure.

In each of the above embodiments, resin or metal is exemplified as the material for the frames 11, 211, 12, 13, 313, 413, 513, 15, 315, 17, and 340 constituting the electronic percussion instruments 10, 210, 310, 410, and 510, but specific examples of the resin include ABS resin, nylon, and fiber-reinforced resin. In addition, specific examples of the metal include bronze and stainless steel.

Each of the above embodiments illustrates the case where the striking surface frame 12 is used as the top cymbal of the electronic percussion instruments 10, 210, 310, 410, and 510 (electronic hi-hat), but the bottom frames 11 and 211 may be omitted, and the striking surface frame 12 may be used independently.

Each of the above embodiments illustrates the case where the outer edge of the bell portion 12a of the striking surface frame 12 and the inner edge of the bow portion 12b are connected by the connecting portion 12c (elastic body), but the disclosure is not necessarily limited thereto. For example, an elastic body corresponding to the connecting portion 12c may be bonded to the upper surface of the bow portion 12b, and the bell portion 12a may be overlapped on the elastic body. In the case of this configuration, the bow portion 12b may be extended to the inner peripheral side, and the extended part may be supported by the stand 1 (rod 4).

Each of the above embodiments illustrates the case where one bell sensor 14 and one bow sensor 16 are respectively mounted on the lower surface side of the bell portion 12a and the bow portion 12b (bell frame 13 and bow frame 15), but the disclosure is not necessarily limited thereto. For example, multiple bell sensors 14 and/or multiple bow sensors 16 may be mounted on the lower surface side of the bell portion 12a and the bow portion 12b.

Each of the above embodiments illustrates the case where each of the bell sensor 14 and the bow sensor 16 is mounted to the lower surface of the striking surface frame 12 (bell portion 12a and bow portion 12b) via the bell frames 13, 313, 413, and 513 and the bow frames 15 and 315, but the disclosure is not necessarily limited thereto. For example, the bell frames 13, 313, 413, and 513 or the bow frames 15 and 315 may be omitted, and either one of the bell sensor 14 and the bow sensor 16 may be directly mounted to the lower surface of the striking surface frame 12.

Additionally, one or both of the bell sensor 14 and the bow sensor 16 of the first and second embodiments may be mounted to the upper surface of the bell frame 13 or the bow frame 15, and the bell sensor 14 of the third to fifth embodiments may be mounted to the upper surface of the hanging portion 313c or the upper surface of the protruding portions 313d and 413d. The bow sensor 16 of the third to fifth embodiments may also be mounted to the lower surface of the bow frame 315 (facing portion 315a).

Each of the above embodiments illustrates the case where the bell frames 13, 313, 413, and 513 are directly connected to the lower surface of the bell portion 12a (without an elastic body therebetween), while the bow frames 15 and 315 are connected to the lower surface of the bow portion 12b via the elastic body 19, but the disclosure is not necessarily limited thereto. For example, the bell frames 13, 313, 413, and 513 may be connected to the lower surface of the bell portion 12a via an elastic body (member corresponding to the elastic body 19), and in this case, the divided portion of the elastic body may be formed in a region near the bell sensor 14 (at a position side by side with the bell sensor 14 in the radial direction). Besides, the elastic body 19 may be omitted, and the bow frames 15 and 315 may be directly connected to the lower surface of the bow portion 12b.

Each of the above embodiments illustrates the case where the bell frames 13, 313, 413, and 513 are formed using a metal plate, while the bow frames 15 and 315 are formed using a resin plate, and the rigidity of the bow frames 15 and 315 is lower than the rigidity of the bell frames 13, 313, 413, and 513, but the disclosure is not necessarily limited thereto. For example, the bell frames 13, 313, 413, and 513 may be formed using a resin material, or the bow frames 15 and 315 may be formed using a metal material. Also, the rigidity of the bell frames 13, 313, 413, and 513 may be lower than the rigidity of the bow frames 15 and 315, or the rigidities may be the same.

The first and second embodiments described above illustrate the case where the bell frame 13 and the bow frame 15 are formed in an annular shape, but the disclosure is not necessarily limited thereto. For example, one or both of the bell frame 13 and the bow frame 15 may be formed intermittently in the circumferential direction (for example, multiple fan-shaped frames 13 and 15 are arranged in the circumferential direction).

Further, each of the above embodiments illustrates the case where the bow frames 15 and 315 are provided to extend toward the inner peripheral side from the elastic body 19, and the bow sensor 16 is mounted to the lower surface or upper surface of the inner edge side of the bow frames 15 and 315, but the disclosure is not necessarily limited thereto. For example, the bow frames 15 and 315 may protrude toward the outer peripheral side beyond the elastic body 19, and the bow sensor 16 may be mounted to the protruding part (outer edge side of the bow frames 15 and 315).

The first and second embodiments described above illustrate the case where the inner edge of the bow frames 15 and 315 is located on the inner peripheral side with respect to the connecting portion 12c, and the bow sensor 16 is disposed on the inner peripheral side with respect to the outer edge of the connecting portion 12c, but for example, the inner edge of the bow frames 15 and 315 may be located on the outer peripheral side with respect to the connecting portion 12c, and the bow sensor 16 may be disposed on the outer peripheral side with respect to the connecting portion 12c. That is, the shape of the bow frames 15 and 315 and the arrangement of the bow sensor 16 are not limited to the above forms, and can be changed as appropriate. The same applies to the shape of the bell frames 13, 313, 413, and 513 and the arrangement of the bell sensor 14.

Each of the above embodiments illustrates the case where the elastic body 19 (connection position between the bow portion 12b and the bow frames 15 and 315) is located on the inner peripheral side with respect to the radial center C of the bow portion 12b, but the disclosure is not necessarily limited thereto. For example, the elastic body 19 may be mounted near the radial center C of the bow portion 12b or on the outer peripheral side with respect to the radial center C. That is, the connection position between the bow portion 12b and the bow frames 15 and 315 is not limited to the above form, and the same applies to the case where the elastic body 19 is omitted (the bow frames 15 and 315 are directly connected to the lower surface of the bow portion 12b).

Each of the above embodiments illustrates the case where the elastic body 20 is mounted between the lower surface of the bow portion 12b and the edge frame 17, but the disclosure is not necessarily limited thereto. For example, the elastic body 20 may be omitted, and the edge frame 17 may be directly mounted to the lower surface of the bow portion 12b. In this case, a part with a thickness corresponding to the elastic body 20 may be provided in the edge frame 17.

Each of the above embodiments illustrates the case where the edge sensor 18 is disposed between the elastic body 20 and the struck portion 17a, but the disclosure is not necessarily limited thereto. For example, the edge frame 17 may protrude toward the inner peripheral side beyond the elastic body 20, and the edge sensor 18 may be mounted to the protruding part. The edge sensor 18 may also be mounted to the lower surface of the edge frame 17.

Each of the above embodiments illustrates the case where multiple edge sensors 18 are mounted to the edge frame 17, and the second embodiment illustrates that the closed state of the striking surface frame 12 is detected by the multiple edge sensors 18, but the disclosure is not necessarily limited thereto. For example, one edge sensor 18 may be mounted to the edge frame 17. In addition, a sensor (for example, pressure-sensitive sensor) that detects contact of the bottom frame 211 may be mounted to the lower surface of the edge frame 17, to detect the closed state of the striking surface frame 12 with the sensor.

The second embodiment described above illustrates the case where the outer edge of the bottom frame 211 comes into contact with the edge frame 17 on the outer peripheral side with respect to the elastic body 20 at the time when the striking surface frame 12 is in the closed state, but the disclosure is not necessarily limited thereto. For example, the outer edge of the bottom frame 211 may be brought into contact with the edge frame 17 directly below the elastic body 20. Further, in the case where the edge frame 17 protrudes toward the inner peripheral side with respect to the elastic body 20 as described above, the outer edge of the bottom frame 211 may be brought into contact with the protruding part.

The third to fifth embodiments described above illustrate the case where the substrate frame 340 that supports the substrate 350 and the bell frames 313, 413, and 513 are vertically connected by the connecting member 330, and the connecting member 330 and the substrate frame 340 are not in contact with the bow frame 315, but the disclosure is not necessarily limited thereto. For example, the substrate frame 340 may be omitted, and components such as the substrate 350 may be supported by the bow frame 315, or the bow frame 315 and the substrate frame 340 may be vertically connected by the connecting member 330. In addition, one or both of the connecting member 330 and the substrate frame 340 may be in contact with (are connected to) the bow frame 315.

In the third to fifth embodiments described above, a structure in which the elastic body 333 is interposed between the upper shaft 331 and the lower shaft 332 of the connecting member 330 is exemplified as an example of the structure for elastically supporting the substrate frame 340 on the bell frames 313, 413, and 513, but the disclosure is not necessarily limited thereto. For example, a rubber bush (elastic body) formed in an annular shape may be interposed between the upper shaft 331 and the mounting hole 313e and/or between the lower shaft 332 and the mounting hole 342. In addition, the bell frames 313, 413, and 513 and the substrate frame 340 may be vertically connected by a connecting member that does not include the elastic body 333 (that is, no elastic body is interposed between the bell frames 313, 413, and 513 and the substrate frame 340).

The third to fifth embodiments described above illustrate the case where the covering portion 343 of the substrate frame 340 that covers the outer edge part of the bow frame 315 is not in contact with the bow portion 12b, but the disclosure is not necessarily limited thereto. For example, the covering portion 343 may be omitted, or the covering portion 343 may be brought into contact with (connected to) the bow portion 12b or the bow frame 315.

The third to fifth embodiments described above illustrate the case where the bow sensor 16 is mounted to the facing portion 315a of the bow frame 315 that vertically faces the protruding portions 313d and 413d (that is, the bow sensor 16 is disposed at a position that overlaps with the protruding portions 313d and 413d in vertical view), but the disclosure is not necessarily limited thereto. For example, the bow sensor 16 may be disposed on the outer peripheral side with respect to the protruding portions 313d and 413d.

The third to fifth embodiments described above illustrate the case where the connecting member 330 is inserted into the through hole 315b formed in the facing portion 315a of the bow frame 315, but the disclosure is not necessarily limited thereto. For example, the through hole 315b may be omitted, and the connecting member 330 may be disposed on the inner peripheral side with respect to the bow frame 315.

The third embodiment described above illustrates the case where the bell sensor 14 (see FIG. 6) is mounted to the hanging portion 313c of the bell frame 313, and the connecting member 330 is connected to the protruding portion 313d, but the disclosure is not necessarily limited thereto. For example, the protruding portion 313d may be omitted, and the connecting member 330 may be connected to the hanging portion 313c, or the bell sensor 14 may be mounted to the protruding portion 313d while the connecting member 330 is connected to the hanging portion 313c. The same applies to the bell frames 413 and 513 of the fourth and fifth embodiments.

The fourth embodiment described above illustrates the case where the protruding portion 413d to which the bell sensor 14 is mounted and the protruding portion 413d to which the connecting member 330 is connected are provided separately. However, the connecting member 330 may be connected to the protruding portion 413d to which the bell sensor 14 is mounted.

### Description of Reference Numerals

- 10, 210, 310, 410, 510: electronic percussion instrument
- 12: striking surface frame
- 12a: bell portion
- 12b: bow portion
- 12c: connecting portion
- 13, 313, 413, 513: bell frame (sensor frame)
- 313b: connection portion
- 313c, 413c: hanging portion
- 313d, 413d: protruding portion
- 14: bell sensor (sensor)
- 15, 315: bow frame (sensor frame)
- 315a: facing portion
- 315b: through hole
- 16: bow sensor (sensor)
- 19: elastic body
- 330: connecting member
- 340: substrate frame
- 343: covering portion
- 350: substrate
- C: radial center of bow portion

## Claims

1. An electronic percussion instrument (10, 210, 310, 410, 510), comprising:
a striking surface frame (12) comprising a bell portion (12a) that forms a central side part of a striking surface, a bow portion (12b) that is formed in an annular shape surrounding the bell portion and forms an outer peripheral side part of the striking surface, and a connecting portion (12c) that is made of an elastic body and connecting an inner edge side part of the bow portion to the bell portion;
a sensor frame (13, 313, 413, 513, 15, 315) connected along a circumferential direction to a lower surface of the bell portion or the bow portion of the striking surface frame; and
a sensor (14, 16) mounted to the sensor frame and detecting vibration of the sensor frame.

2. The electronic percussion instrument according to claim 1, wherein:
the sensor frame comprises a bell frame (13, 313, 413, 513) that is connected to the lower surface of the bell portion, and a bow frame (15, 315) that is connected to the lower surface of the bow portion, and
the sensor comprises a bell sensor (14) that is mounted to the bell frame, and a bow sensor (16) that is mounted to the bow frame.

3. The electronic percussion instrument according to claim 2, wherein:
the bell frame is directly connected to the lower surface of the bell portion, and
the bow frame is connected to the lower surface of the bow portion via an elastic body (19).

4. The electronic percussion instrument according to claim 2, wherein:
the bow frame has lower rigidity than the bell frame.

5. The electronic percussion instrument according to claim 2, wherein:
a connection position between the bow portion and the bow frame is located on an inner peripheral side with respect to a radial center (C) of the bow portion.

6. The electronic percussion instrument according to claim 2, wherein:
the bow frame extends toward an inner peripheral side from a connection part between the bow portion and the bow frame, and
the bow sensor is mounted to an inner edge side of the bow frame.

7. The electronic percussion instrument according to claim 6, wherein:
an inner edge of the bow frame is located on an inner peripheral side with respect to the connecting portion, and
the bow sensor is disposed on an inner peripheral side with respect to an outer edge of the connecting portion.

8. The electronic percussion instrument according to claim 1, wherein:
a connection part between the striking surface frame and the sensor frame is divided in the circumferential direction, and a divided part thereof is formed at a position arranged side by side with the sensor in a radial direction in a vertical view.

9. The electronic percussion instrument according to claim 2, wherein:
an inner edge part of the bell frame is connected to an inner edge side of the bell portion.

10. The electronic percussion instrument according to claim 9, comprising:
a substrate (350) to which the sensor is connected;
a substrate frame (340) supporting the substrate and disposed below the bow frame; and
a connecting member (330) connecting the substrate frame and the bell frame vertically,
wherein the substrate frame and the connecting member are not in contact with the bow frame.

11. The electronic percussion instrument according to claim 10, wherein:
the substrate frame is elastically supported by the bell frame via the connecting member.

12. The electronic percussion instrument according to claim 11, wherein:
the substrate frame comprises a covering portion (343) that rises upward from an outer edge of the substrate frame and covers the bow frame from an outer peripheral side, and
the covering portion and the bow portion are not in contact with each other.

13. The electronic percussion instrument according to claim 10, wherein:
the bell frame comprises a connection portion (313b) that is connected to the lower surface of the bell portion, a hanging portion (313c) that hangs downward from the connection portion, and a protruding portion (313d) which protrudes toward an outer peripheral side from a lower end of the hanging portion and to which the connecting member is connected.

14. The electronic percussion instrument according to claim 13, wherein:
the bow frame comprises a facing portion (315a) which faces the protruding portion vertically and to which the bow sensor is mounted,
a plurality of through holes (315b) arranged in the circumferential direction are formed in the facing portion, and
the connecting member is inserted into the plurality of through holes.

15. The electronic percussion instrument according to claim 13, wherein:
the bell sensor is mounted to the hanging portion formed in an annular shape.

16. The electronic percussion instrument according to claim 13, wherein:
a plurality of the hanging portions and a plurality of the protruding portions are formed at intervals in the circumferential direction, and
the protruding portion to which the bell sensor is mounted and the protruding portion to which the connecting member is connected are provided separately.

17. A mounting method of a sensor in an electronic percussion instrument (10, 210, 310, 410, 510), which comprises a striking surface frame (12) comprising a bell portion (12a) that forms a central side part of a striking surface, a bow portion (12b) that is formed in an annular shape surrounding the bell portion and forms an outer peripheral side part of the striking surface, and a connecting portion (12c) that is made of an elastic body and connecting an inner edge side part of the bow portion to the bell portion, the mounting method comprising:
connecting a sensor frame (13, 313, 413, 513, 15, 315) along a circumferential direction to a lower surface of the bell portion or the bow portion of the striking surface frame; and
mounting the sensor (14, 16) that detects vibration of the sensor frame to the sensor frame.
